# NOUVEAU FASCICULE DE BREVET EUROPEEN

(11) **EP 1 157 077 B2**
(45) Date de publication et mention de la décision concernant l'opposition: **01.02.2006**
(45) Mention de la délivrance du brevet: 14.08.2002
(21) Numéro de dépôt: 00903755.7
(22) Date de dépôt: 09.02.2000
(51) Int. Cl.: C09K 3/14, C01F 7/02

(54) **PROCÉDÉ DE FABRICATION DE GRAINS ABRASIFS CONSTITUES D'ALUMINE POLYCRISTALLINE**
VERFAHREN ZUR HERSTELLUNG VON SCHLEIFKÖRNERN AUS POLYKRISTALLINEM ALUMINIUMOXID
METHOD FOR PRODUCING ABRASIVE GRAINS CONSISTING OF POLYCRYSTALLINE ALUMINA

(30) Priorité: 15.02.1999 FR 9901962
(43) Date de publication de la demande: 28.11.2001
(73) Titulaire: PEM ABRASIFS-REFRACTAIRES, 92400 Courbevoie (FR)
(72) Inventeur: ALARY, Jean-André, F-74190 Chedde (FR)
(74) Mandataire: Fénot, Dominique
(86) Numéro de dépôt international: PCT/FR2000/000299
(87) Numéro de publication internationale: WO 2000/047688

(56) Documents cités:
- EP-A- 0 355 481
- CZ-A- 136 828
- FR-A- 1 319 102
- GB-A- 284 131
- GB-A- 1 595 196
- US-A- 1 798 261
- US-A- 1 871 792
- US-A- 1 871 793
- US-A- 3 781 172

## Description

### Domaine technique de l'invention

L'invention concerne un procédé permettant d'obtenir des grains abrasifs à base d'alumine constitués de cristaux dont la dimension est de l'ordre de quelques dizaines de micromètres et obtenus par solidification rapide d'alumine en fusion.

### Etat de la technique

L'utilisation d'abrasifs à base d'alumine est très ancienne et remonte à l'usage de l'émeri déjà connu du monde grec. Depuis le milieu du 20^{ème} siècle, la synthèse du corindon obtenu par fusion et solidification de l'alumine a fourni des grains abrasifs constitués de cristaux d'alumine a de structure hexagonale compacte, dont les dimensions étaient de plusieurs millimètres. Par abus de langage, ce type de matériau a été désigné sous le nom de corindon électrofondu. Il s'agit bien sûr d'un matériau solide dont la dénomination fait allusion au procédé de préparation..

Les grains abrasifs obtenus par broyage du corindon électrofondu sont ainsi, pour la plupart, constitués de monocristaux hexagonaux et leurs propriétés mécaniques qui, au mieux, sont celles du cristal d'alumine ne peuvent être améliorées.

Pour obtenir des meilleures propriétés mécaniques et abrasives, on a cherché depuis longtemps à fabriquer un matériau constitué de cristaux de dimensions aussi faibles que possible, chaque grain abrasif étant constitué d'un assemblage de cristaux, de sorte que ses propriétés mécaniques résultent non seulement de la nature des cristaux dont il était constitué mais aussi et surtout de l'existence de nombreux joints de grains, permettant une consolidation du grain.

Ainsi, le brevet US 1192709 (Carborundum), déposé en 1914, décrit de l'alumine électrofondue avec des cristaux de taille comprise entre 10 et 300 µm (en moyenne 100 µm) coulée en plaques minces, dans une lingotière étroite d'épaisseur inférieure à 150 mm. Cette voie de solidification rapide a été également explorée en 1932 par Alcoa (brevets US 1798261 et US 1871793) qui proposait l'atomisation de l'alumine électrofondue pour la transformer en sphères creuses de diamètre inférieur à 5 mm et constituées de cristaux inférieurs à 250 µm. Une technique assez voisine est décrite dans le brevet GB 284131 de Metallbank. Le brevet US 3781172 permet d'obtenir des cristaux d'alumine électrofondue de taille inférieure à 50 µm en coulant celle-ci sur un lit de granules froids de même composition, ce qui accélère le refroidissement. L'expérience montre toutefois que cette technique est peu performante, l'alumine liquide pénétrant mal entre les grains froids.
Le brevet n° 136828 de la République Tchèque décrit un procédé dans lequel le corindon liquide est versé dans un moule puis subit un refroidissement brutal combiné avec l'application d'ultra-sons.

Le brevet FR 1319102 (Norton), déposé en 1961, décrit un procédé et un dispositif de coulée à refroidissement rapide pour abrasifs alumineux, consistant à couler une bande mince sur un cylindre rotatif. On obtient des cristaux de taille comprise entre 1 et 30 µm. Le brevet FR 2242462 (Norton), déposé en 1977, concerne un procédé et un appareil de coulée d'abrasifs entre deux bandes métalliques pour former une lame mince. L'effet de trempe est limité dans ce cas par la faible conductivité thermique du corindon. Il ne semble pas que ces procédés de coulée en plaques minces aient donné lieu à des réalisations industrielles.

On a vu apparaître en 1979 les alumines issues d'un procédé sol-gel, obtenues par calcination puis frittage d'un hydrate d'alumine, le plus souvent la boehrnite, obtenue elle-même par précipitation à partir d'une solution de sel ou d'alkoxyde d'aluminium. Ce type de matériau permet de préparer des grains abrasifs constitués d'un assemblage de cristaux de taille inférieure au micromètre, ce qui leur donne d'excellentes propriétés mécaniques. Ce matériau est aujourd'hui couramment utilisé pour la fabrication de meules de rectification dans lesquelles il entre pour environ 30% en poids de la composition, le solde étant constitué de corindon électrofondu classique. Le coût très élevé des alumines sol-gel est l'explication communément avancée pour justifier cette proportion de 30%.

Le but de la présente invention est de fournir une alumine électrofondue conservant la morphologie propre aux alumines électrofondues mais présentant une cristallisation contrôlée beaucoup plus fine que celle du corindon de l'art antérieur et des propriétés abrasives nettement améliorées.

### Objet de l'Invention

L'invention a pour objet un procédé de fabrication de grains abrasifs à base d'alumine, comportant ta fusion de l'alumine, sa coulée à débit constant inférieur à 80 kg/mn, et son refroidissement par dispersion de l'alumine fondue en fines gouttelettes pour donner des particules de taille inférieure à 1 mm. Cette dispersion se fait, de préférence, par atomisation assistée par ultrasons, de fréquence comprise entre 15 et 50 kHz.

Le procédé selon l'invention permet d'obtenir un grain abrasif à base d'alumine électrofondue caractérisé en ce qu'il est constitué de cristaux de structure hexagonale, de dimension inférieure à 100 µm, et de préférence à 30 µm, et plus préférentiellement à 5 µm, avec une densité supérieure à 97%, et de préférence à 98%, de la densité théorique de l'alumine, et d'une dureté Knoop de plus de 2000. Les grains abrasifs ainsi obtenus ne sont pas par eux-mêmes revendiqués.

### Description l'invention

Analysant les propriétés des alumines sol-gel et les résultats obtenus avec les meules fabriquées en utilisant ce type de matériau, la demanderesse est arrivée aux conclusions suivantes :
- la dureté des alumines sol-gel est très élevée (dureté Knoop HK de 2100 à 2200) notoirement supérieure à celle des corindons électrofondus de l'art antérieur.
- les particules d'alumine sol-gel et les particules de corindon électrofondu présentent des morphologies différentes : alors que les particules de corindon électrofondu sont anguleuses et présentent des arrêtes vives, les particules d'alumines sol-gel sont beaucoup plus massives et présentent des formes arrondies.
- la microstructure de l'alumine sol-gel est très fine et constituée de cristaux hexagonaux d'alumine a de dimensions submicroniques, alors que la microstructure des alumines électrofondues est essentiellement monocristalline.
- des meules constituées de différentes proportions d'alumine sol-gel et de corindon, ont montré qu'une meule préparée avec 100 % d'alumine sol-gel donne des résultats médiocres et que l'association du corindon et de l'alumine sol-gel est indispensable pour obtenir le niveau de résultats revendiqué par les fabricants d'alumine sol-gel.

Attribuant ces bons résultats à l'association d'un produit coupant, le corindon, et d'un matériau de renforcement très dur, l'alumine sol-gel, ce qui va à l'encontre de tout ce qui a été dit et écrit sur le sujet, la demanderesse a donc recherché à rassembler dans un matériau unique la morphologie des grains du corindon électrofondu et la dureté de l'alumine sol-gel. La voie explorée a été celle de la solidification rapide pour précisément chercher à obtenir une cristallisation aussi fine que possible.

Compte tenu des propriétés physiques du corindon (chaleur de solidification etconduction thermique à l'état solide), les techniques classiques utilisées pour obtenir une solidification rapide s'avèrent très insuffisantes pour obtenir une réduction suffisante de la taille des cristaux.

Ainsi l'expérience montre que pour obtenir des cristaux d'environ 200 µm il faut couler en 5 mm d'épaisseur, ce qui est à la fois très contraignant et peu performant au vu de la taille des cristaux obtenus. L'atomisation a été proposée dans le brevet US 1871793 déjà mentionné, permettant d'obtenir des sphères creuses de diamètre inférieur à 5 mm et d'épaisseur de paroi inférieure à 250 µm. Aucune indication n'est donnée sur la taille des cristaux. D'autres procédés de solidification rapide ont été proposés par la suite, tels que ceux décrits dans les brevets Norton FR 1319102 et FR 2422462, qui indiquent des vitesses de refroidissement comparables à celles des techniques classiques de trempe et conduisent à des tailles de cristaux relativement grossières de l'ordre de 200 µm. Ils ne présentent donc que peu d'intérêt pratique. On notera cependant que l'obtention d'une cristallisation plus fine est intéressante, car elle modifie le comportement du matériau au broyage et permet d'obtenir une répartition granulométrique présentant un maximum vers la maille correspondant à la taille des cristaux.

Désireuse d'explorer des moyens capables d'améliorer encore les performances des grains abrasifs à base d'alumine électrofondue obtenus par solidification rapide, la demanderesse a trouvé qu'un paramètre important pour obtenir une cristallisation très fine était le débit de coulée du corindon liquide, qu'il faut maintenir en dessous de 80 kg/min, et de préférence en dessous de 50 kg/min. Un tel débit, nettement inférieur à celui habituellement pratiqué, peut être obtenu à l'aide d'une busette de coulée chauffée, par exemple par induction, de manière à éviter une solidification prématurée dans la busette.

Elle a trouvé également qu'on pouvait améliorer, par rapport aux techniques de l'art antérieur, la dispersion du corindon à l'état liquide avant de le solidifier. L'atomisation dans l'air ou la granulation à l'eau s'avèrent des moyens insuffisants pour obtenir une dispersion adéquate du corindon liquide, et il est nécessaire de leur adjoindre des moyens supplémentaires permettant d'obtenir des particules de taille n'excédant pas 1 mm, et de l'ordre de quelques dixièmes de mm. A de telles dimensions, le matériau se présente sous la forme de billes à peu près sphériques, pleines ou creuses selon les cas, et constituées majoritairement de cristaux de taille variant entre 20 et 30 µm environ pour les billes de diamètre proche de 1 mm jusqu'à 10 µm et en dessous pour les billes de diamètre 0.2 mm.

Un moyen particulièrement efficace pour obtenir cette dispersion est l'atomisation assistée par ultrasons de fréquence comprise de préférence entre 15 et 50 kHz.

Solidifié de cette manière, le corindon électrofondu conserve sa qualité première qui est celle de donner des grains dont la morphologie présente des arêtes vives ; il présente par ailleurs une densité et une dureté supérieures à celles du corindon électrofondu de l'art antérieur ; on peut suivant cette technique atteindre une densité de 3,95, c'est-à-dire une densité supérieure à 98% de la densité théorique de l'alumine (3,98), et une dureté Knoop de 2050. Grâce à sa densité élevée, les propriétés du grain polycristallin se rapprochent de celles d'un grain monocristallin parfait.

Le matériau ainsi obtenu dont la dureté n'égale pas celle de l'alumine sol-gel présente cependant un meilleur compromis en termes de forme des grains, de dureté et de coût.

### Exemples

### Exemple 1

Dans un four à arc de fusion classique on fond de l'alumine à 99,5 % d'Al₂O₃ en la portant à environ 2200°C. Le contenu du four est coulé de façon discontinue.

Avec des lingotières prévues pour recevoir une masse d'environ dix tonnes de corindon fondu, on obtient par solidification lente des lingots constitués d'un matériau de structure grossière perturbée par de nombreuses porosités: à la périphérie des lingots la taille des cristaux est de quelques mm, alors qu'au coeur la taille de ces cristaux atteint plusieurs cm.

Après broyage à 1 mm, le matériau obtenu est constitué majoritairement de grains monocristallins de structure hexagonale, dont le densité est d'environ 3,7 et la dureté de 1900 Knoop. La proportion de grains de granulométrie P80 (selon la nomenclature de la FEPA :
Fédération Européenne des Producteurs d'Abrasifs), c'est-à-dire de grains dont la moitié sont plus gros que 185 µm, est de 18 % environ.

### Exemple 2

Avec les mêmes moyens de fusion que ceux de l'exemple 1, mais en limitant le basculement du four afin que le débit de corindon liquide n'excède pas 1,5 t en 10 min, on coule le corindon liquide sur une plaque de cuivre refroidie intérieurement par circulation d'eau. La plaque de cuivre est inclinée à 30° pour limiter l'épaisseur de la plaque de corindon se solidifiant sur le cuivre. On a ainsi obtenu des plaques d'environ 5 mm d'épaisseur qui ont ensuite été broyées à 1 mm.

La proportion de grains P80 est de 38 %, notoirement plus élevée que dans le cas précédent. L'examen des grains ainsi obtenus fait apparaître que le matériau préparé de cette manière est constitué majoritairement de cristaux hexagonaux dont la taille s'étend de 150 à 250 µm. La densité est de 3,8 et la dureté Knoop de 1925.

### Exemple 3

Avec les mêmes moyens de fusion que ceux de l'exemple 1, et dans les conditions de basculement du four de l'exemple 2 on coule le corindon liquide sur un chenal à la sortie duquel il est atomisé au moyen d'un jet d'air. On obtient des billes creuses dont le diamètre extérieur est inférieur à 5 mm environ. Ces billes sont constituées de cristaux de structure hexagonale dont la taille se situe entre 100 et 250 µm. La densité est de 3,85 et la dureté Knoop de 1950.

### Exemple 4

Sur un fourà arc de fusion de 1 MW, on adapte en fond de cuve une busette de coulée continue dont le diamètre du canal de coulée est de 12 mm ; la busette est chauffée par induction au moyen d'un générateur de 10 kHz; la puissance disponible sur le générateur est de 50 kW. On alimente le four avec la même matière première que dans les trois exemples précédents. Le débit de corindon liquide obtenu au travers de la busette est de 36 kg/min.

Ce jet de corindon liquide est dirigé sur une sonotrode constituée par une lame de titane inclinée à 45° et mise en vibration par une source d'ultrasons de fréquence 15 kHz. On disperse ainsi le jet de corindon fondu en particules de 0,1 mm environ et l'on constate que le jet de matériau en fusion n'entre pas en contact de la sonotrode, laissant un espace d'environ 1 mm entre la sonotrode et le jet de liquide.

L'examen du matériau obtenu montre qu'il est constitué majoritairement de cristaux élémentaires dont la taille est inférieure à 5 µm de densité 3,95 et de dureté Knoop 2050.

### Exemple 5

Après broyage au grain P80 selon la norme FEPA. les produits issus des quatre exemples précédents, sont utilisés pour réalisation de meules dans des conditions identiques. Les meules sont ensuite testées par essai de meulage sur acier 100C6 sous pression de 0.25 MPa et une vitesse d'avance de 60 m/s.

Ont également été testées dans les mêmes conditions, une meule préparée à partir d'un mélange de 70 % (en poids) de produit de l'exemple 2 et 30 % d'alumine sol-gel et une meule préparée entièrement à partir d'alumine sol-gel.

On examine les rapports entre masse de métal enlevé et masse de meule perdue, ce qui donne:
Pour le produit de l'exemple 1 : 30
Pour le produit de l'exemple 2 : 50
Pour le produit de l'exemple 3 : 55
Pour le produit de l'exemple 4 : 120
Pour le mélange 70 % de produit de l'exemple 2 et 30 % de sol-gel: 150
Pour l'alumine sol-gel pure: 60

## Revendications

1. Procédé de fabrication de grains abrasifs à base d'alumine électrofondue, comportant la fusion de l'alumine, sa coulée à débit constant inférieur à 80 kg/mn, et son refroidissement par dispersion de l'alumine fondue en fines gouttelettes par atomisation assistée par ultra-sons de fréquence comprise entre 15 et 50 kHz pour donner des particules de taille inférieure à 1 mm.

2. Procédé selon la revendication 1, **caractérisé en ce que** le débit de coulée est inférieur à 50 kg/mn.

3. Procédé selon l'une des revendications ou 2 **caractérisé en ce que** la coulée se fait à travers une busette chauffée par induction.

## Patentansprüche

1. Verfahren zur Herstellung von Schleifkörnern auf Basis von elektrisch geschmolzenem Aluminiumoxid, umfassend das Schmelzen des Aluminiumoxids, sein Gießen mit konstanter Gießleistung von weniger als 80 kg/mn und sein Abkühlen durch Dispersion des geschmolzenen Aluminiumoxids in Form von feinen Tröpfchen durch Atomisierung unter Verwendung von Ultraschall mit einer Frequenz von 15 bis 50 kHz, um Teilchen mit einer Größe von kleiner als 1 mm zu erhalten.

2. Verfahren nach Anspruch 1, **dadurch gekennzeichnet, dass** die Gießleistung weniger als 50 kg/min beträgt.

3. Verfahren nach einem der Ansprüche 1 oder 2, **dadurch gekennzeichnet, dass** das Gießen durch ein induktiv erwärmtes Gießrohr hindurch erfolgt.

## Claims

1. Method for producing abrasive grains containing electro-fused alumina, comprising melting of the alumina, its casting at a constant flow rate of less than 80 kg/min, and its cooling by dispersion of the molten alumina in fine droplets by ultrasound assisted atomization at a frequency between 15 and 50 kHz to give particles having a size of less than 1 mm.

2. Method according to claim 1, **characterized in that** the casting flow rate is less than 50 kg/min.

3. Method according to either of claims 1 or 2, **characterized in that** casting is conducted through a nozzle heated by induction.
